## Europäisches Patentamt
## European Patent Office
## Office européen des brevets

(19)

(11) Publication number: **0 236 003**
**B1**

(12) # EUROPEAN PATENT SPECIFICATION

(45) Date of publication of the patent specification:
24.10.90

(51) Int. Cl.⁵: **B23D 41/00**

(21) Application number: **87301341.1**

(22) Date of filing: **17.02.87**

(54) Broaching machine.

(30) Priority: **22.02.86 GB 8604438**

(43) Date of publication of application:
**09.09.87 Bulletin 87/37**

(45) Publication of the grant of the patent:
**24.10.90 Bulletin 90/43**

(84) Designated Contracting States:
**CH DE ES FR IT LI**

(56) References cited:
**DE-U- 1 907 657**
**US-A- 2 507 581**
**US-A- 2 539 981**
**US-A- 2 818 001**
**US-A- 3 180 231**

(73) Proprietor: **Associated Machines & Tools Limited,
Deedmore Road Bell Green, Coventry(GB)**

(72) Inventor: **Barker, Anthony Leslie, Ashley House Main
Street Claybrook Magna, Near Lutterworth
Leicestershire(GB)**

(74) Representative: **Healy, Cecilia Patricia et al, 33 Prince of
Wales Road, Coventry CV5 8GR(GB)**

## Description

This invention relates to broaching machines according to the precharacterising part of claims 1 and 3 respectively; see US-A 2 539 981.

In the following description by way of example, reference will be made primarily to an internal broaching machine but certain aspects of the invention may be more widely applicable, for example to external or surface broaching machines.

In an internal broaching operation, a tool known as a broach, which is made of hardened high speed tool steel, is forced through a bore to cut formations such as splines in the walls of the bore. The broach is usually pulled through the bore by hydraulic rams.

Clearly, this involves the generation of considerable stresses in the broach.

If the bore is undersized or the work piece is misplaced so that it obstructs the broach, the stresses in the tool can become excessive and the broach may shatter.

This can be dangerous to the operator of the machine in spite of the use of machine guards. It inevitably means the loss of the expensive broaching tool and a time delay while the broken tool is removed and a new broach is inserted to continue operation of the machine.

For this reason, it has been considered necessary for every work piece being passed to a broaching machine to be gauged for the accuracy of the internal bore. In spite of this, breaking of the broach is a fairly frequent accurance. The need for 100% gauging also reduces the scope for automating the process, for example by robot loading of the broaching machine.

It has been proposed to provide a safety device in which, as the broach is lowered into the bore, any build up of hydraulic pressure in the power rams is detected and serves to cut off the drive to the broach. However, this is a very insensitive method and does not satisfactorily prevent breaking of the broach in every instance.

It is an object of a first aspect of the invention to provide a broaching machine in which this disadvantage is overcome or reduced.

According to this aspect, the invention provides a broaching machine comprising a work piece holder; a crosshead adapted to carry a broaching tool and arranged for translational movement towards the work piece holder under the operation of fluid operated ram means;
and drive interruption means to stop further travel of the crosshead; including a lost motion coupling responsive to contact by the broaching tool on an obstruction;
characterised in that the fluid operated ram means comprise a pair of ram assemblies;
in that one ram assembly is rigidly secured to the crosshead and the other ram assembly is non-positively coupled to the crosshead to provide said lost motion coupling:
in that proximity sensing means are arranged to detect relative movement between the crosshead and said other ram assembly;

and in that the drive interruption means are operable in response to a signal of the proximity sensing means whereby, when travel of the crosshead is resisted, any resulting relative movement detected between the crosshead and said other ram assembly serves to stop further travel of the crosshead.

The drive interruption means may comprise drive reversal means adapted automatically to reverse the direction of drive to the broach.

The invention has a further aspect, concerned with the setting of limit switches required for cyclic operation of the broaching machine. Since a broaching machine may be 4 or 5 metres tall, the manual setting of limit switches at the top and bottom of the power stroke of the broach may be a fairly lengthy process, involving repeated adjustments at the upper and lower parts of the broach travel. Because of the lengthy setting up time for each new broach, machine down time becomes a significant factor except where long runs of identical broaching operations are to be carried out.

In a broaching machine of the type which can be cycled automatically an upper crosshead or "retriever crosshead" holds the broach above the work piece holder or table while the work piece is inserted into position. The retriever crosshead is lowered until the lower end of the broach projects below the work piece, where it can be gripped by a chuck of the lower or power crosshead. The changeover point at which the power crosshead grips the broach must be indicated by a limit switch to control proper cycling of the machine. Clearly, the retriever crosshead has to be arranged to release the tool before the power crosshead is operated.

When the entire operative length of the broach has been pulled by the power crosshead through the work piece, it is necessary for the power crosshead to be returned slightly and the retriever crosshead must then grasp the upper end of the broach to draw it back to the start position.

In order to prevent the return stroke from being excessively long, since it represents idle time for the machine, a lower limit switch needs to be set at a position such that the power stroke ends at a distance below the work piece holder related to the broach length. This will obviously also be related to the retriever crosshead stroke above the work piece holder.

It is an object of a further aspect of the present invention to provide means for setting the position of upper and lower limit means for the broaching machine.

According to this aspect of the invention there is provided a broaching machine comprising a work piece holder; a first crosshead adapted to carry a broaching tool and arranged for translational movement towards the work piece holder under the operation of fluid operated ram means,
characterised in that the fluid operated ram means comprise a pair of ram assemblies; in that one ram assembly is rigidly secured to the first crosshead and the other ram assembly is non-positively coupled to the first crosshead to provide a lost motion coupling;

tect relative movement between the first crosshead and said other ram assembly;

in that control means are provided responsive to a signal of said proximity sensing means to actuate a first limit stop positioning means;

in that said limit stop positioning means include measuring means adapted to measure the distance of the first crosshead from a datum point and to generate a signal related to said distance;

and in that a first limit switch is provided and is adapted to be moved to a first limit position determined by the distance signal such that, thereafter, the first limit switch can operate to prevent travel of the first crosshead beyond said first limit position towards the work piece holder.

The machine may also comprise a second limit stop positioning means responsive to said distance signal to move a second limit switch positioned at the opposite side of the work piece holder from the first limit switch to a second limit position such that, thereafter, the second limit switch can operate to prevent travel of a second, power crosshead beyond said second limit position away from the work piece holder.

A broaching machine embodying the invention will now be described by way of example only with reference to the accompanying drawings in which;

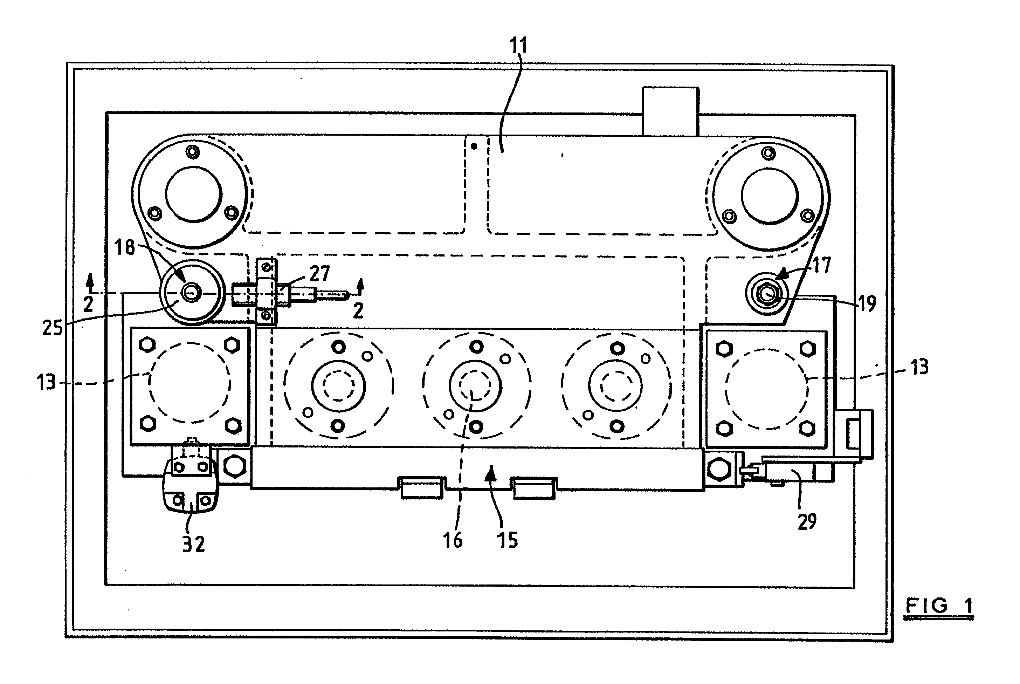

FIGURE 1 is a plan view of a upper retriever crosshead of a automatic cycle internal broaching machine.

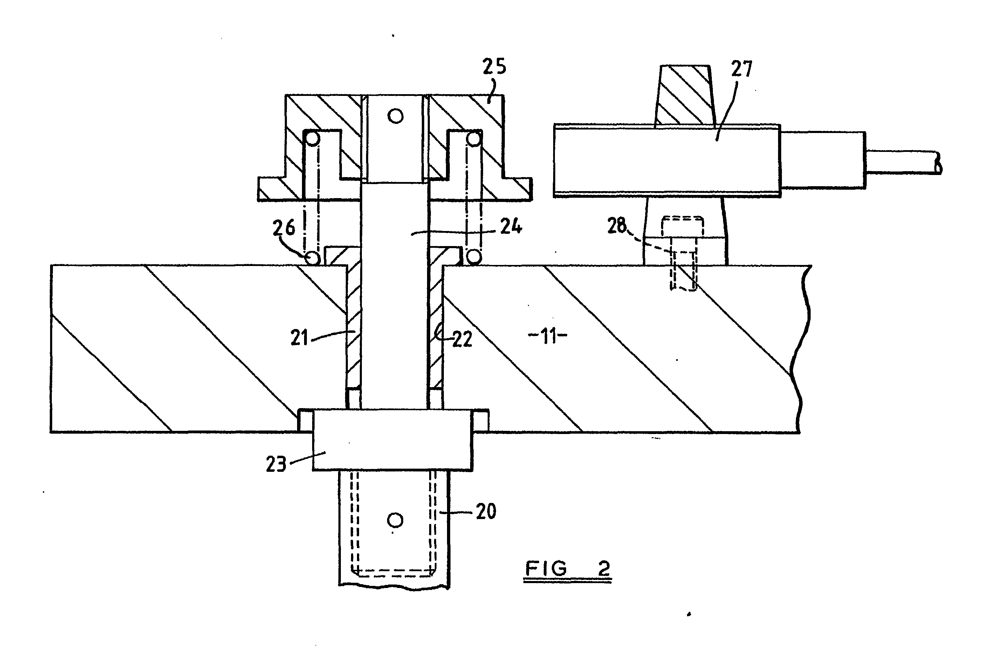

FIGURE 2 is a detail sectional view on the line 2:2 of Figure I.

FIGURE 3 is a diagrammatic front elevational view of the broaching machine with parts of the machine broken away.

FIGURE 4 is a partial side elevational view on the arrow 4 of Figure 3.

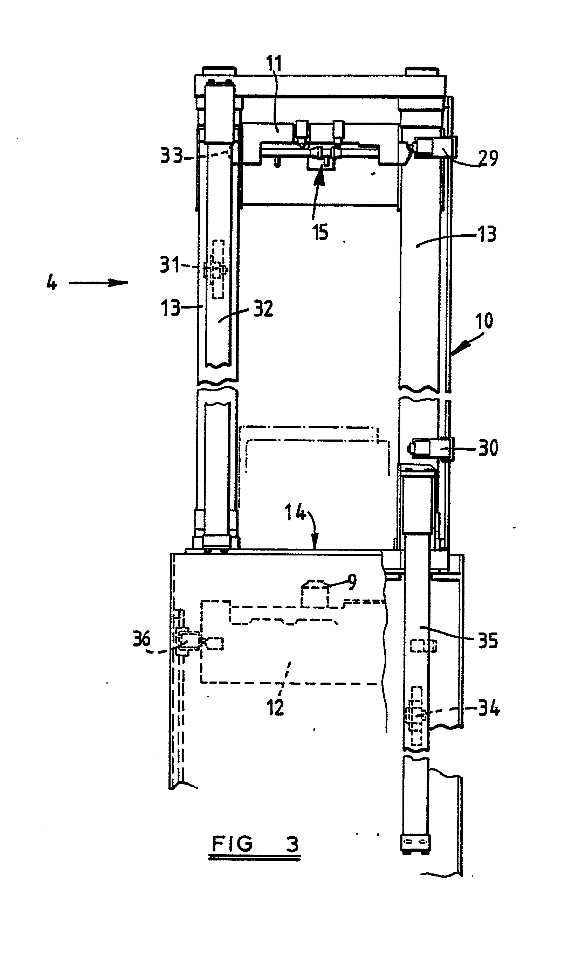

Referring first to Figure 3 of the drawings, an internal broaching machine is generally indicated at 10 and comprises an upper, retriever crosshead 11 and a lower, power crosshead 12 each of which is mounted for vertical reciprocating movement on respective columns such as 13, relative to a work piece holder or table 14.

Each crosshead 11, 12 is equipped with one or more tool holding chucks 15 which can be operated to grip or release a broaching tool (not shown) in a tool holder such as 16.

Considering the upper, retriever crosshead 11, this can be seen in more detail in Figures I and 2 of the drawings. The crosshead is raised and lowered by the action of a pair of hydraulic rams 17, 18. The ram 17 is rigidly secured to the crosshead 11 by a nut 19 but the second ram 18 is merely arranged so that its piston rod 20 passes through a bush 21 in a cylindrical bore 22 of the crosshead 11. An enlarged collar 23 on the piston rod 20 carries the weight of the crosshead 11 but permits relative sliding movement of the piston rod 20 and the crosshead 11 should any obstruction be met by the crosshead 11 as it descends.

An extension 24 of the piston rod 20 projects above the crosshead and is fitted with a flanged bobbin 25, spring loaded at 26 away from the upper surface of the crosshead 11.

A proximity sensor 27 of generally known type is fixed at 28 to the upper surface of the crosshead 11 and is arranged to detect any relative movement between the bobbin 25 and the sensor 27 (and hence the crosshead).

The arrangement is such that, when the rams 17 and 18 are contracted to lower the crosshead 11, any obstruction to the downward movement of the crosshead will in effect tend to lift it off the supporting collar 23 and hence cause a relative movement between the bobbin 25 and the crosshead. This will be detected immediately by the proximity sensor 27 and a signal can then be sent to the control means for the apparatus to stop further lowering of the crosshead.

The broach in the tool holder 16 may for example be obstructed by a misplaced or undersized work piece at the work table 14. This will serve to trigger the sequence of events just described and further lowering of the broach will be stopped immediately. The signal from the proximity sensor 27 can be arranged either simply to stop lowering of the tool, for example in a manual mode of the machine, or to reverse the lowering of the tool so that the crosshead 11 is lifted again, enabling the undersized work piece to be removed and replaced.

This prevents or reduces the danger of the broach being shattered by continuing the broaching cycle where the work piece is undersized or in some way displaced so as to obstruct the proper passage of the broach through the bore.

In a broaching machine having this feature, it is possible automatically to set the upper and lower limit switches required for controlling the broaching cycle.

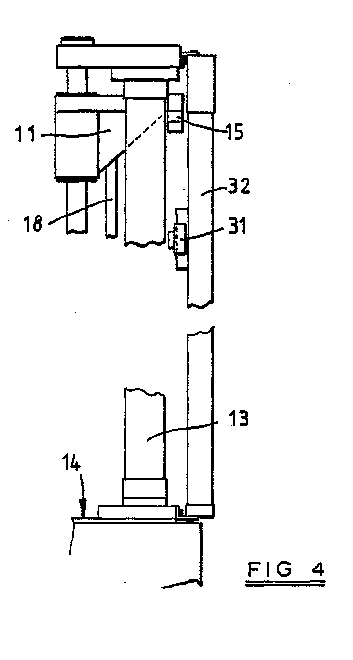

Turning to Figures 3 and 4 of the drawings, the retriever crosshead 11 has a normal top position defined by a fixed limit switch 29 and a normal fully lowered position defined by a lower fixed limit switch 30. However, a variable position limit switch 31 is also provided, the position of this being determined by the particular size of broach to be used.

At the commencement of a broaching operation, the broach is held in the tool holder 16 of the retriever crosshead 11 and is lowered until its lower end passes through the worktable 14 and work piece and can be gripped by the lower, power crosshead 12. It is necessary to define the changeover point so that the upper retriever crosshead does not approach the worktable too closely at this stage. Clearly, the position of the upper movable limit switch 31 needs to be calculated in accordance with the position of the crosshead when the broaching tool engages in the lower tool holder or pull chuck 9.

In order to set the upper movable limit switch 31 automatically, the broach is inserted into the tool holder 16 and held in place by the retriever chuck 15. The upper, retriever crosshead 11 is then lowered towards the worktable 14 and, as soon as the limit position is reached, and the broach contacts the bottom of the pull chuck 9, the proximity sensor 27 detects relative movement between the crosshead 11 and the bobbin 25. This simultaneously stops the lowering of the crosshead and initiates operation of the limit switch positioning means to be described.

An electric cylinder 32 is positioned at one side of the machine and carries a movable carriage on which is mounted the limit switch 3l. The electric cylinder is of a generally known type used for accurate positioning of components and incorporates a lead screw and gear rollers. Rotation of the lead screw, driven by a d.c. motor, moves a roller nut linearly along the cylinder. The cylinder also includes an electric pulse transmitter which can send a pulse signal to the machine control means.

The electric cylinder is used as a measuring system in that the limit switch 3l is moved to a position in which it detects the presence of the crosshead ll. It does this by contacting the switch cam 33 on the crosshead.

The electric cylinder 32 transmits a pulse signal to the control means indicating the distance between the cam 33 on the crosshead ll and a predetermined datum point. This signal is used to position the limit switch 3l so that, thereafter, it will stop the downward travel of the crosshead at the changeover position. A small amount of working clearance, typically a few millimetres, is added to the actual position of the crosshead where the broach contacts the pull chuck 9 since otherwise, on each cycle of operation, the broach would make contact with the bottom of the chuck.

The signal to the control means is then used to position a lower movable limit switch 34 provided on a second electric cylinder 35 which is positioned below the worktable l4. This lower limit switch 34 is positioned a distance equivalent to that of the upper movable limit switch 3l above the table l4.

The lower power crosshead has its uppermost limit of travel defined by the fixed limit switch 36 but the lower limit switch 34 is required to end the downward power stroke of the power crosshead l2, corresponding to the full passage of the broach through the work piece.

It is therefore no longer necessary for the upper and lower movable limit switches 3l and 34 to be set manually by trial and error methods in setting up the broaching machine for the new broach. The broaches may be fitted to the machine and the limit switch setting cycle is initiated by lowering the retriever crosshead ll. The whole cycle can, in general, be completed and both limit switches set in less than one minute, compared with at least several minutes for manual setting of the switches. Furthermore, because of the necessary lubricant reservoirs below the table level l4, it has hitherto been an unpleasant job to set the lower limit switch 34 and this is avoided by automatic setting.

Since the positioning of the limit switches is achieved by means of a pulse generating electric cylinder, suitable pulse counting means in the control circuitry of the machine can be used to check the identity of the broach being used from the limit switch settings. This may be useful for monitoring production.

## Claims

1. A broaching machine comprising a work piece holder;
a crosshead (11) adapted to carry a broaching tool and arranged for translational movement towards the work piece holder under the operation of a pair of fluid operated ram means (17, 18);
and drive interruption means to stop further travel of the crosshead;
**characterised in that** one ram assembly (l7) is rigidly secured to the crosshead (ll) and the other ram assembly (l8) is non-positively coupled to the crosshead (ll);
in that proximity sensing means (27) are arranged to detect relative movement between the crosshead (ll) and said other ram assembly (l8);
and in that the drive interruption means are operable in response to a signal of the proximity sensing means (27) whereby, when travel of the crosshead (ll) is resisted, any resulting relative movement detected between the crosshead (ll) and said other ram assembly (l8) serves to stop further travel of the crosshead.

2. A broaching machine according to Claim l further characterised in that the drive interruption means comprise drive reversal means adapted automatically to reverse the direction of drive to the broach.

3. A broaching machine comprising a work piece holder;
a first crosshead (ll) adapted to carry a broaching tool and arranged for translational movement towards the work piece holder under the operation of a pair of fluid operated ram means (17, 18);
**characterised in that** the fluid operated ram means comprise a pair of ram assemblies (17, 18);
in that one ram assembly (l7) is rigidly secured to the first crosshead (ll) and the other ram assembly (l8) is non-positively coupled to the first crosshead (ll);
in that proximity sensing means (27) are arranged to detect relative movement between the first crosshead (ll) and said other ram assembly (l8);
in that control means are provided responsive to a signal of said proximity sensing means (27) to actuate a first limit stop (3l) positioning means;
in that said limit stop positioning means include measuring means (32) adapted to measure the distance of the first crosshead (ll) from a datum point and to generate a signal related to said distance;
and in that a first limit switch (3l) is provided and is adapted to be moved to a first limit position determined by the distance signal such that, thereafter, the first limit switch can operate to prevent travel of the first crosshead (ll) beyond said first limit position (3l) towards the work piece holder (l4).

4. A broaching machine according to Claim 3 and further characterised in that it comprises a second limit stop (34) positioning means responsive to said distance signal to move a second limit switch (34) positioned at the opposite side of the work piece holder (l4) from the first limit switch (3l) to a second limit position such that, thereafter, the second limit switch (34) can operate to prevent travel of a

second, power crosshead (l2) beyond said second limit position away from the work piece holder (l4).

5. A broaching machine according to Claim 3 or Claim 4 further characterised in that said measuring means comprise an electric cylinder (32) generating a signal related to the distance from a datum point to a cam (33) of the first crosshead (ll).

## Patentansprüche

1. Räummaschine mit einem Werkstückhalter, einem Kreuzkopf (11) zur Aufnahme eines Räumwerkzeugs und ausgebildet, unter Einwirkung fluidbetätigter Kolbenmittel (17, 18) eine translatorische Bewegung in Richtung des Werkstückhalters durchzuführen, und mit Mittel zum Unterbrechen des Antriebs zum Stoppen der weiteren Bewegung des Kreuzkopfs, mit einer Leergangkupplung, die anspricht, wenn das Räumwekzeug ein Hindernis berührt, dadurch gekennzeichnet, dass
die fluidbetätigten Kolbenmittel ein Paar Kolbenanordnungen (17, 18) aufweisen;
eine Kolbenanordnung (17) starr an dem Kreuzkopf (11) befestigt ist und die andere Kolbenanordnung (18) kraftschlüssig mit dem Kreuzkopf (11) gekoppelt ist, um die Leergangkupplung bereitzustellen;
Sensormittel (27) vorgesehen sind, um die Relativbewegung zwischen dem Kreuzkopf (11) und der anderen Kolbenanordnung (18) wahrzunehmen;
und dass die Mittel zum Unterbrechen des Antriebs betätigbar sind, abhängig von einem Signal der Nah-Sensormittel (27), wodurch, wenn die Bewegung des Kreuzkopfes gehemmt ist, jede resultierende Relativbewegung, die zwischen dem Kreuzkopf (11) und der genannte anderen Kolbenanordnung (18) wahrgenommen wurde, dazu dient, eine weitere Bewegung des Kreuzkopfs zu stoppen.

2. Räummaschine nach Anspruch 1, des weiteren dadurch gekennzeichnet, dass die Mittel zum Unterbrechen des Antriebs Mittel zum Umkehren des Antriebs aufweisen, die angepasst sind, automatisch die Richtung des Antriebs zur Räumnadel umzukehren.

3. Räummaschine mit einem Werkzeughalter; einem ersten Kreuzkopf (11) zur Aufnahme eines Räumwerkzeugs aun ausgebildet, um unter Einwirkung fluidbetätigter Kolbenmittel (17, 18) eine translatorische Bewegung in Richtung des Werkstückhalters durchzuführen, dadurch gekennzeichnet, dass die fluidbetätigten Kolbenmittel ein Paar Kolbenanordnungen (17, 18) aufweisen;
eine Kolbenanordnung (17) starr an dem ersten Kreuzkopf (11) festgelegt ist und die andere Kolbenanordnung (18) kraftschlüssig an den ersten Kreuzkopf (11) gekuppelt ist, um die Leergangkupplung bereitzustellen;
Sensormittel (27) angeordnet sind, um die Relativbewegung zwischen dem ersten Kreuzkopf (11) und der genannten anderen Kolbenanordnung (18) wahrzunehmen; Steuermittel vorgesehen sind, die auf ein Signal der Sensormittel (27) ansprechen, um erste Grenzstop-Positioniermittel (31) zu betätigen; die Grenzstop-Positioniermittel Messmittel (32) umfassen, die angepasst sind, den Abstand des ersten Kreuzkopf (11) von einem Bezugspunkt zu messen und ein Signal zu erzeugen, das auf diesen Abstand bezogen ist;
und dass ein erster Endschalter (31) vorgesehen und angepasst ist, zu einer ersten Endposition bewegt zu werden, die durch das Distanzsignal derart bestimmt ist, dass darufhin der erste Endschalter bestätigbar ist, um die Bewegung des ersten Kreuzkopfs (11) über die erste Endposition (31) in Richtung des Werkstückhalters (14) zu verhindern.

4. Räummaschine nach Anspruch 3, des weiteren dadurch gekennzeichnet, dass ein zweites Grenzstop-Positioniermittel (34) vorgesehen ist, das auf das Distanzsignal anspricht, um einen zweiten Endschalter (34), auf der von dem ersten Grenzschalter (31) gegenüberliegenden Seite des Werkstückhalters (14) gelegen, zu einer zweiten Endposition zu bewegen, derart, dass danach der zweite Endschalter (34) bewirken kann, die Bewegung eines zweiten angetriebenen Kreuzkopfs (12) über die zweite Endposition von dem Werkstückhalter (14) fort zu verhindern.

5. Räummaschine nach Anspruch 3 oder 4, des weiteren dadurch gekennzeichnet, dass die genannten Messmittel einen elektrischen Zylinder (32) aufweisen, der ein auf den Abstand zwischen einem Bezugspunkt und einer Nocke (33) des ersten Kreuzkopfs (11) bezogenes Signal erzeugt.

## Revendications

1. Machine pour le brochage comportant un porte-pièces; une traverse (11) servant à porter une broche montée de manière à pouvoir se déplacer en translation en direction du porte-pièce lors du fonctionnement de moyens formant glissière (17, 18) actionnées de manière hydraulique et des moyens d'interruption de l'entraînement servant à stopper la course de la traverse, comportant un couplage à perte de course réagissant lorsque la broche rencontre un obstacle, caractérisé en ce que les moyens de déplacement du chariot (17, 18) actionnés de manière hydraulique comportent une paire d'ensemble formant glissière (17, 18), en ce qu'un ensemble formant glissière (17) est fixé rigidement à la traverse (11) et en ce que l'autre ensemble formant glissière (18) est couplé de façon non rigide à la traverse (11) pour assurer ledit couplage à vide, en ce que des moyens capteurs de proximité (27) sont prévus pour capter un mouvement relatif entre la traverse (11) et ledit autre ensemble formant glissière (18), et en ce que les moyens d'interruption de course peuvent être actionnés en réponse à un signal provenant des moyens capteurs de proximité (27), ce qui permet, lorsque la traverse (11) rencontre une résistance sur sa course, d'utiliser tout mouvement relatif résultant détecté entre la traverse (11) et ledit autre ensemble formant glissière (18) pour empêcher la traverse de poursuivre sa course.

2. Machine pour le brochage selon la revendication 1, caractérisée de plus en ce que les moyens d'interruption de course comportent des moyens d'inversion du sens de l'entraînement adaptés pour inverser automatiquement le sens de l'entraînement vers la broche.

3. Machine pour le brochage comportant un porte-pièce ainsi qu'une première traverse (11) conçue pour porter une broche et montée de manière à pouvoir se déplacer en translation en direction du porte-pièce lors du fonctionnement de moyens formant glissière actionnés de manière hydraulique, caractérisée en ce que les moyens formant glissière (17, 18) actionnés de manière hydraulique comportent une paire d'ensemble formant glissière (17, 18), en ce qu'un ensemble formant glissière (17) est fixé rigidement à la première traverse (11) et en ce que l'autre ensemble formant glissière (18) est couplé de façon non rigide à la première traverse (11) pour assurer ledit couplage à perte de course, en ce que des moyens capteurs de proximité (27) sont prévus pour capter un mouvement relatif entre la première traverse (11) et l'autre ensemble formant glissière (18), en ce que des moyens de commande sont prévus qui réagissent en réponse à un signal provenant desdits moyens capteurs de proximité (27), pour actionner un premier moyen de positionnement de butée de fin de course (31), en ce que lesdits moyens de positionnement de butée de fin de course comportent des moyens de mesure (32) pour mesurer la distance entre la première traverse (11) et un point de référence et pour envoyer un signal dépendant de ladite distance, et en ce qu'un premier interrupteur de fin de course (31) est prévu et adapté pour être déplacé jusqu'à une première position de butée déterminée par le signal dépendant de la distance de telle sorte que, de cette manière, le premier interrupteur de fin de course peut être actionné pour empêcher que la course de la première traverse (11) ne dépasse ladite première position de butée (31) en direction du porte-pièces (14).

4. Machine pour le brochage selon la revendication 3 et caractérisée en outre en ce qu'elle comporte un deuxième moyen de positionnement de butée de fin de course (34) réagissant audit signal dépendant de la distance pour déplacer un deuxième interrupteur de fin de course (34) placé à l'opposé du porte-pièce (14) à partir du premier interrupteur de fin de course (31) jusqu'à une deuxième position de butée, de sorte que, de cette manière, le deuxième interrupteur de fin de course (34) peut empêcher que la course d'une deuxième traverse motrice (12) ne dépasse ladite deuxième position de butée en s'éloignant du porte-pièces (14).

5. Machine pour le brochage selon la revendication 3 ou la revendication 4, caractérisée en outre en ce que lesdits moyens de mesure comportent un cylindre électrique (32) envoyant un signal dépendant de la distance entre un point de référence et une came (33) de la première traverse.

FIG 1

FIG 2

FIG 3

FIG 4